# EUROPEAN PATENT SPECIFICATION

(11) **EP 3 785 946 B1**
(45) Date of publication and mention of the grant of the patent: **02.11.2022**
(21) Application number: 20192611.0
(22) Date of filing: 25.08.2020
(51) Int. Cl.: B60C 9/00, B60C 9/08, B60C 15/00, B60C 15/04, B60C 9/04, B60C 15/05, B60C 15/06

(54) **TIRE WITH CLAMPED PLY**
REIFEN MIT EINGESPANNTER LAGE
PNEUMATIQUE DOTÉ D'UN PLI SERRÉ

(30) Priority: 29.08.2019 US 201962893429 P; 27.07.2020 US 202016939578
(43) Date of publication of application: 03.03.2021
(73) Proprietor: The Goodyear Tire & Rubber Company, Akron, OH 44316 (US)
(72) Inventor: BONNET, Gilles, 9176 Niederfeulen (LU); DI PRIZIO, Olivier, 57330 Hettange-Grande (FR); RING, Ralph Damon, Beach City, OH Ohio 44608 (US); REICHLING, Gilles, 9189 Vichten (LU); SOULTIS, Nicolas, 6700 Freylange (BE); LIONETTI, Robert Edward, 7227 Bereldange (LU); OMONT, Patrice Jacques, 8370 Hobscheid (LU); TALBOT, William Alain, 6600 BASTOGNE (BE)
(74) Representative: Goodyear IP Law

(56) References cited:
- EP-A1- 1 780 054
- JP-A- H09 315 108
- JP-A- 2005 199 775
- JP-A- 2014 076 700
- KR-B1- 101 775 321
- US-A1- 2011 143 160

## Description

### Field of the Invention

The invention relates generally to tires and more particularly to a pneumatic tire.

### Background of the Invention

For high performance and ultra-high performance tires, it is often desired to eliminate the ply turnup around the bead. Eliminating the ply turnup removes the stress concentration and improves the ply line in the lower area of the tire. Further, if the bead has no ply turnup, there is increased design flexibility for tire/rim interface improvement. However, it is difficult to build the tire without building the tire on a solid core. The ply cord typically pulls out from the bead during the tire curing process, because of the rapid expansion of the tire carcass during the cure process. The solid core eliminates the movement of the carcass. However, building a tire on a solid core requires special equipment and often is a much slower tire building process. Thus, it is desired to provide a tire that has no ply turnup using conventional tire building equipment.

KR 101 775 321 B1 describes a tire in accordance with the preamble of claim 1. Further tires having a carcass ply clamped between two bead portions are known from JP 2005-199 775 A, JP 2014-076 700 A, EP 1 780 054 A1, JP H09-315 108 and US 2011/0143160 A1.

### Summary of the Invention

The invention relates to a tire in accordance with claim 1.

Dependent claims refer to preferred embodiments of the invention.

The tire has no carcass ply turnup.

In a preferred aspect of the invention, the first bead portion is located on the axially inner side compared to the second bead portion.

In a preferred aspect of the invention, the first bead portion has the shape of a pyramid in cross section and the second bead portion has the shape of an inverted pyramid in cross section.

In a preferred aspect of the invention, the first bead portion has a radially outer end or tip that is radially inward of the base of the second bead portion.

In a preferred aspect of the invention, the first bead portion has a radially inner end or base that is radially inward of the base of the second bead portion.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Lateral" means an axial direction.

"Radial" and "radially" means directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100°C.

### Brief Description of the Drawings

The invention will be described by way of example and with reference to the accompanying drawings in which:
Figure 1 is a cross-sectional view of a tire with no bead turnup;
Figure 2 is a close-up view (cross section) of the bead area of a tire similar to the tire of Figure 1;
Figure 3A is a close-up view (cross section) of the first bead of the tire of Figure 1 or Figure 2; and
Figure 3B is a close-up view (cross section) of the second bead of the tire of Figure 1 or Figure 2.

### Detailed Description of Example Embodiments of the Present Invention

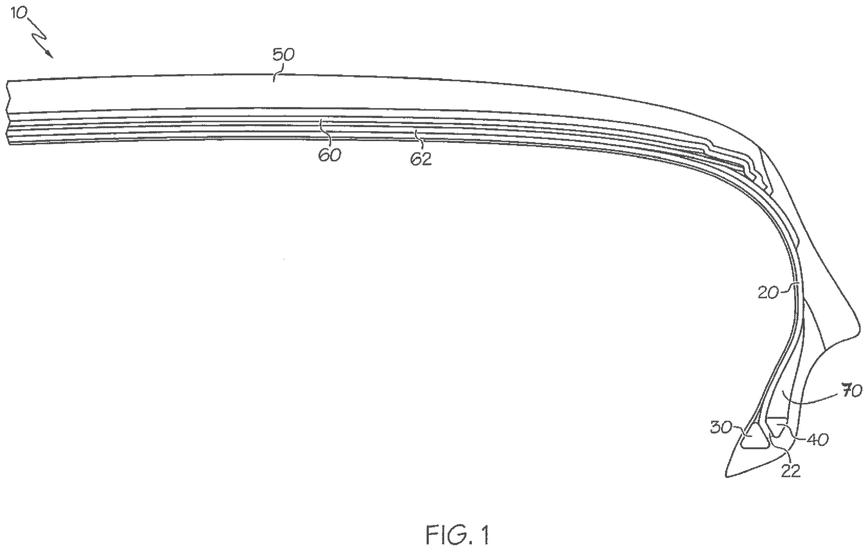

Figure 1 illustrates a tire 10 of an embodiment of the present invention that has no bead turnup. The tire 10 may further include a tread 50, and one or more belts 60, 62. The belts 60, 62 may comprise conventional belt configurations known to those skilled in the art.

The tire 10 has a single layer or monolayer of ply 20 that has a radially inner portion 22 that is clamped between a first bead portion 30 and a second bead portion 40 and ends at a radially innermost end.

In one embodiment, the radially innermost end of the radially inner portion 22 is located within the bead formed by the first bead portion 30 and the second bead portion 40, i.e. is not located outside of the bead. This is shown in Fig. 1.

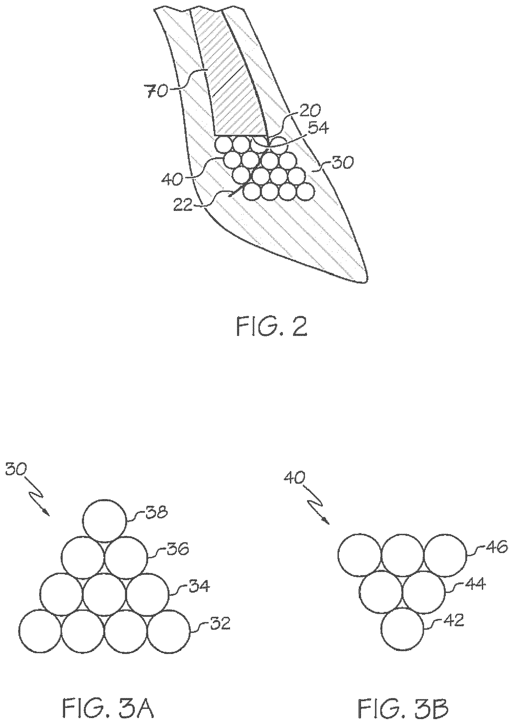

In another embodiment, the radially innermost end of the radially inner portion 22 is located outside of the bead formed by the first bead portion 30 and the second bead portion 40. This is shown in Fig. 2

The ply layer 20 comprises or consists of radial cords, preferably high modulus cords, such as 2200/3 denier cords or 3340/2 denier cords.

The cord material may be nylon, aramid, or a hybrid construction of nylon/aramid.

The radially inner portion 22 is clamped between the first bead portion 30 and the second bead portion 40.

The first bead portion 30 is a triangular shaped bead portion or a substantially triangular shaped bead portion (when viewed in cross-section across the bead ring) formed of a plurality of bead wires that are formed into a pyramid.

As shown in Figure 3A, the first bead portion 30 has preferably four rows of bead wires, with four wires in the radially inner most layer 32, three wires in the third layer 34, two wires in the second layer 36, and one wire in the radially outermost or first layer 38. The pyramid may however also have only three wires or more than four wires in the radially inner most layer 32 and then a corresponding number of layers and a corresponding number of wires in the following layers to form a pyramid.

Preferably, the first bead portion 30 is formed of metal wire or steel wire, preferably of a 1.3 mm wire, or with a diameter ranging from 1.1 to 1.5 mm. The first bead portion 30 may be pre-formed and then applied onto a tire building drum.

Preferably, the first bead portion 30 is the axially inner bead portion compared to the second bead portion 40 (see Fig. 1).

The tire 10 further includes a second bead portion 40, preferably on the axially outer side, that functions to clamp the radially inner portion 22 of the ply 20 between the first and the second bead portion 30, 40.

The second bead portion 40 is an inverted triangle or a substantially inverted triangle compared to the first bead portion (when viewed in cross-section across the bead ring) and has at least two layers of bead wires. Preferably, the second bead portion has one layer less than the first bead portion.

As shown in Figure 3B, the second bead portion 40 has preferably three rows of bead wires, with one wire in the radially inner most layer 42, two wires in the middle layer 44 and three wires in the third, radially outermost layer 46. The pyramid may however also have only two wires or more than three wires in the radially outermost layer 46 and then a corresponding number of layers and a corresponding number of wires in the following layers to form an inverted pyramid.

Like the first bead portion 30, the second bead portion 40 is formed of metal wire or steel wire, preferably of a 1.3 mm wire, or with a diameter from 1.1 to 1.5 mm.

In the embodiment shown in Fig. 3B, the first layer 42 is the radially inward layer formed of a single wire, while the middle layer 44 is formed of two wires. The radially outermost layer 46 is formed of three reinforcement wires.

The tire may further include an optional apex 70 that is located radially outward of the axially outer bead portion 40.

Preferably, the apex 70 has a radially outer portion that is at least substantially triangular and is preferably located between the ply 20 and a chafer.

The apex 70 has a radially inner lip or end 54 that is positioned adjacent the axially outer bead portion 40.

The apex 50 is preferably formed from a highly stiff material in order to get a stiffness gradient between the bead wires and the chafer compound.

The apex 50 is mechanically locked to the second bead portion 40 and the surrounding area, minimizing or eliminating the ply slippage during the tire building process and shaping process.

The stiffness of the apex 70 is characterized by the dynamic modulus G', which is sometimes referred to as the "shear storage modulus" or "dynamic modulus," reference is made to Science and Technology of Rubber, second edition, 1994, Academic Press, San Diego, Calif., edited by James E. Mark et al, pages 249-254.

The shear storage modulus (G') values are indicative of rubber compound stiffness which can relate to tire performance. The tan delta value at 100°C is considered as being indicative of hysteresis, or heat loss.

In a first embodiment, the apex 50 comprises or consists of a stiff rubber composition having a shear storage modulus G' measured at 1% strain and 100°C according to ASTM D5289 ranging from 14 to 43 MPa. In a more preferred embodiment, the second apex 50 comprises or consist of a rubber composition having a shear storage modulus G' measured at 1% strain and 100°C according to ASTM D5289 ranging from 23 to 43 MPa.

## Claims

1. A tire having a tread (50), a single layer of carcass ply (20), a first at least substantially triangular shaped bead portion (30) and a second at least substantially triangular shaped bead portion (40), wherein the radially inner portion (22) of the single layer of carcass ply (20) is secured between the first bead portion (30) and the second bead portion (40) and wherein the tire (10) has no carcass ply turnup, **characterized in that** the first and second bead portion (30, 40) is formed from bead wires having a minimum elongation at break of 6%, as measured by ASTM D4975-14, and having a diameter ranging from 0.8 to 1.5 mm.

2. The tire of claim 1 wherein the radially innermost end of the radially inner portion (22) is located outside of the bead formed by the first bead portion (30) and the second bead portion (40).

3. The tire of claim 1 wherein the radially innermost end of the radially inner portion (22) is located within the bead formed by the first bead portion (30) and the second bead portion (40).

4. The tire of at least one of the previous claims wherein the first bead portion (30) is formed of two or more layers (32, 34, 36, 38) of wires.

5. The tire of at least one of the previous claims wherein the second bead portion (40) is formed of two or more layers (42, 44, 46) of wires, preferably two, three or four layers.

6. The tire of at least one of the previous claims wherein the first bead portion (30) is located on the axially inner side compared to the second bead portion (40).

7. The tire of at least one of the previous claims wherein the first bead portion (30) is formed of three, four or five layers (32, 34, 36, 38) of wires.

8. The tire of at least one of the previous claims wherein the second bead portion (40) has a first end forming a base and a second end forming a tip, wherein the base is preferably positioned radially outward of the tip.

9. The tire of at least one of the previous claims wherein the first bead portion (30) has a first end forming a base and a second end forming a tip, wherein the base is preferably positioned radially inward of the tip.

10. The tire of at least one of the previous claims wherein the first bead portion (30) has the shape of a pyramid in cross section and the second bead portion (40) has the shape of an inverted pyramid in cross section.

11. The tire of at least one of the previous claims 8 to 10 wherein the first bead portion (30) has a radially outer end that is radially inward of the base of the second bead portion (40).

12. The tire of at least one of the previous claims 8 to 11 wherein the first bead portion (30) has a radially inner end that is radially inward of the base of the second bead portion (40).

13. The tire of at least one of the previous claims further comprising an apex (70), wherein the apex (70) is formed of a material having a shear storage modulus G' measured at 1% strain and 100ºC according to ASTM D5289 ranging from 14 to 43 MPa, preferably from 23 to 43 MPa.

## Patentansprüche

1. Reifen, der eine Lauffläche (50), eine einzelne Schicht Karkassenlage (20), einen ersten mindestens im Wesentlichen dreieckig geformten Wulstabschnitt (30) und einen zweiten mindestens im Wesentlichen dreieckig geformten Wulstabschnitt (40) aufweist, wobei der radial innere Abschnitt (22) der einzelnen Schicht Karkassenlage (20) zwischen dem ersten Wulstabschnitt (30) und dem zweiten Wulstabschnitt (40) befestigt ist und wobei der Reifen (10) keinen Karkassenlagenumschlag aufweist, **dadurch gekennzeichnet, dass** der erste und der zweite Wulstabschnitt (30, 40) aus Wulstdrähten ausgebildet ist, die eine Mindestbruchdehnung von 6 % aufweisen, gemessen nach ASTM D4975-14, und einen Durchmesser, der von 0,8 bis 1,5 mm reicht, aufweisen.

2. Reifen nach Anspruch 1, wobei sich das radial innerste Ende des radial inneren Abschnittes (22) außerhalb des Wulstes befindet, der durch den ersten Wulstabschnitt (30) und den zweiten Wulstabschnitt (40) ausgebildet ist.

3. Reifen nach Anspruch 1, wobei sich das radial innerste Ende des radial inneren Abschnittes (22) innerhalb des Wulstes befindet, der durch den ersten Wulstabschnitt (30) und den zweiten Wulstabschnitt (40) ausgebildet ist.

4. Reifen nach mindestens einem der vorstehenden Ansprüche, wobei der erste Wulstabschnitt (30) aus zwei oder mehr Schichten (32, 34, 36, 38) von Drähten ausgebildet ist.

5. Reifen nach mindestens einem der vorstehenden Ansprüche, wobei der zweite Wulstabschnitt (40) aus zwei oder mehr Schichten (42, 44, 46) von Drähten, vorzugsweise zwei, drei oder vier Schichten, ausgebildet ist.

6. Reifen nach mindestens einem der vorstehenden Ansprüche, wobei sich der erste Wulstabschnitt (30) im Vergleich zu dem zweiten Wulstabschnitt (40) auf der axial inneren Seite befindet.

7. Reifen nach mindestens einem der vorstehenden Ansprüche, wobei der erste Wulstabschnitt (30) aus drei, vier oder fünf Schichten (32, 34, 36, 38) von Drähten ausgebildet ist.

8. Reifen nach mindestens einem der vorstehenden Ansprüche, wobei der zweite Wulstabschnitt (40) ein erstes Ende, das eine Basis ausbildet, und ein zweites Ende, das eine Spitze ausbildet, aufweist, wobei die Basis vorzugsweise radial außerhalb der Spitze angeordnet ist.

9. Reifen nach mindestens einem der vorstehenden Ansprüche, wobei der erste Wulstabschnitt (30) ein erstes Ende, das eine Basis ausbildet, und ein zweites Ende, das eine Spitze ausbildet, aufweist, wobei die Basis vorzugsweise radial innerhalb der Spitze angeordnet ist.

10. Reifen nach mindestens einem der vorstehenden Ansprüche, wobei der erste Wulstabschnitt (30) im Querschnitt die Form einer Pyramide aufweist und der zweite Wulstabschnitt (40) im Querschnitt die Form einer umgekehrten Pyramide aufweist.

11. Reifen nach mindestens einem der vorstehenden Ansprüche 8 bis 10, wobei der erste Wulstabschnitt (30) ein radial äußeres Ende aufweist, das radial innerhalb der Basis des zweiten Wulstabschnittes (40) liegt.

12. Reifen nach mindestens einem der vorstehenden Ansprüche 8 bis 11, wobei der erste Wulstabschnitt (30) ein radial inneres Ende aufweist, das radial innerhalb der Basis des zweiten Wulstabschnittes (40) liegt.

13. Reifen nach mindestens einem der vorstehenden Ansprüche, ferner umfassend einen Kernreiter (70), wobei der Kernreiter (70) aus einem Material ausgebildet ist, das ein Scherspeichermodul G' aufweist, gemessen bei 1 % Dehnung und 100 °C gemäß ASTM D5289, der von 14 bis 43 MPa, vorzugsweise von 23 bis 43 MPa, reicht.

## Revendications

1. Bandage pneumatique qui possède une bande de roulement (50), une couche unique d'une nappe de carcasse (20), une première portion (30) qui fait office de talon qui possède une configuration de forme au moins essentiellement triangulaire et une seconde portion (40) qui fait office de talon qui possède une configuration de forme au moins essentiellement triangulaire ; dans lequel la portion (22) interne, dans la direction radiale, de la nappe de carcasse unique (20) est située entre la première portion (30) qui fait office de talon et la seconde portion (40) qui fait office de talon ; et dans lequel le bandage pneumatique (10) ne possède aucun retournement de nappe de carcasse vers le haut ; **caractérisé en ce que** l'on obtient la première portion et la seconde portion (30, 40) qui fait office de talons à partir de fils métalliques de talons qui possèdent un allongement à la rupture minimal qui s'élève à 6 %, tel qu'on le mesure par le biais de la norme ASTM D4975-14, et qui possèdent un diamètre qui se situe dans la plage allant de 0,8 à 1,5 mm.

2. Bandage pneumatique selon la revendication 1, dans lequel l'extrémité la plus interne, dans la direction radiale, de la portion interne (22) dans la direction radiale est située à l'extérieur du talon que l'on obtient par l'intermédiaire de la première portion (30) qui fait office de talon et de la seconde portion (40) qui fait office de talon.

3. Bandage pneumatique selon la revendication 1, dans lequel l'extrémité la plus interne, dans la direction radiale, de la portion interne (22) dans la direction radiale est située à l'intérieur du talon que l'on obtient par l'intermédiaire de la première portion (30) qui fait office de talon et de la seconde portion (40) qui fait office de talon.

4. Bandage pneumatique selon au moins une des revendications précédentes, dans lequel on obtient la première portion (30) qui fait office de talon à partir de deux couches ou plus (32, 34, 36, 38) de fils métalliques.

5. Bandage pneumatique selon au moins une des revendications précédentes, dans lequel on obtient la seconde portion (40) qui fait office de talon à partir de deux couches ou plus (42, 44, 46) de fils métalliques, de préférence à partir de deux, trois ou quatre couches.

6. Bandage pneumatique selon au moins une des revendications précédentes, dans lequel la première portion (30) qui fait office de talon est située sur le côté interne dans la direction axiale, par rapport à la seconde portion (40) qui fait office de talon.

7. Bandage pneumatique selon au moins une des revendications précédentes, dans lequel on obtient la première portion (30) qui fait office de talon à partir de trois, quatre ou cinq couches (32, 34, 36, 38) de fils métalliques.

8. Bandage pneumatique selon au moins une des revendications précédentes, dans lequel la seconde portion (40) qui fait office de talon possède une première extrémité qui forme une base et une deuxième extrémité qui forme une pointe ; dans lequel la base est de préférence disposée, dans la direction radiale, à l'extérieur de la pointe.

9. Bandage pneumatique selon au moins une des revendications précédentes, dans lequel la première portion (30) qui fait office de talon possède une première extrémité qui forme une base et une deuxième extrémité qui forme une pointe ; dans lequel la base est de préférence disposée, dans la direction radiale, à l'intérieur de la pointe.

10. Bandage pneumatique selon au moins une des revendications précédentes, dans lequel la première portion (30) qui fait office de talon possède la configuration d'une pyramide en section transversale et la seconde portion (40) qui fait office de talon possède la configuration d'une pyramide inversée en section transversale.

11. Bandage pneumatique selon au moins une des revendications précédentes 8 à 10, dans lequel la portion (30) qui fait office de talon possède une extrémité externe, dans la direction radiale, qui est disposée à l'intérieur, dans la direction radiale, de la base de la seconde portion (40) qui fait office de talon.

12. Bandage pneumatique selon au moins une des revendications précédentes 8 à 11, dans lequel la première portion (30) qui fait office de talon possède une extrémité interne, dans la direction radiale, qui est disposée à l'intérieur, dans la direction radiale, de la base de la seconde portion (40) qui fait office de talon.

13. Bandage pneumatique selon au moins une des revendications précédentes, qui comprend en outre un bourrage sur tringle (70), dans lequel on obtient le bourrage sur tringle (70) à partir d'une matière qui possède un module de conservation en cisaillement G', tel qu'on le mesure dans des conditions de déformation de 1 % et à une température de 100 °C en conformité avec la norme ASTM D5289, qui s'élève de 14 à 43 MPa, de 23 à 43 MPa.
